(19) Europäisches Patentamt
European Patent Office
Office européen des brevets

(11) **EP 3 901 684 A1**

(12) **EUROPEAN PATENT APPLICATION**
published in accordance with Art. 153(4) EPC

(43) Date of publication:
**27.10.2021 Bulletin 2021/43**

(21) Application number: **19898149.0**

(22) Date of filing: **18.12.2019**

(51) Int Cl.:
***G02B 21/36*** (2006.01)

(86) International application number:
**PCT/ES2019/070860**

(87) International publication number:
**WO 2020/128130 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2018 ES 201831272**

(71) Applicant: **Universidad de Valencia**
**46010 Valencia (ES)**

(72) Inventors:
• **SÁNCHEZ ORTIGA, Emilio**
**46010 València (ES)**
• **SAAVEDRA TORTOSA, Genaro**
**46010 València (ES)**
• **MARTÍNEZ CORRAL, Manuel**
**46010 València (ES)**
• **SOLA PICABEA, Jorge**
**46010 València (ES)**

(74) Representative: **Ponti & Partners, S.L.P**
**C. de Consell de Cent 322**
**08007 Barcelona (ES)**

(54) **OPTICAL FLUORESCENCE MICROSCOPE AND METHOD FOR THE OBTAINING OF OPTICAL FLUORESCENCE MICROSCOPY IMAGES**

(57) The present invention relates to a fluorescence optical microscope, comprising:
- an objective (6);
- a support (10) for holding a sample;
- illumination means for projecting onto a sample an illumination pattern that is periodic in two mutually orthogonal transverse directions, from four point light sources;
- a scanning system (7) for providing a relative displacement of the sample with respect to the illumination pattern; and
- imaging means, comprising:

- a light detector for sequentially detecting fluorescent light emitted by different portions of the sample at respective scanning positions; and
- means for forming an image from the light intensity existing in the fluorescent light detected by the light detector.

The present invention also relates to a method adapted for performing the operating steps of the microscope of the invention.

**Figure 1a**

EP 3 901 684 A1

**Description**

Field of the Art

The present invention concerns, in a first aspect, a fluorescence optical microscope that combines a structured illumination according to a given pattern with a scanning of the sample, to obtain optical sectioning and super-resolution without the need to apply any post-processing operation on the images obtained or to rotate the illumination pattern.

A second aspect of the present invention concerns a method for fluorescence optical microscopy imaging adapted to perform the operating steps of the microscope proposed by the first aspect of the invention.

Background Art

The resolving power of optical systems in general, and microscopes in particular, is limited by diffraction. Under conditions of illumination of the sample and detection of the light emitted or reflected by the sample which can be considered as conventional (uniform illumination and detection by means of a sensor located in the focal image plane of the system), the limit given by diffraction is well known and can be expressed by the following equation:

$$\Delta r = 0.6 \frac{\lambda}{NA}$$

where $\lambda$ is the wavelength of the light emitted or reflected by the sample and NA is the numerical aperture of the lens of the microscope used. The distance $\Delta r$ is the minimum distance by which two light-emitting points can be separated so as to be distinguishable under the microscope.

On the other hand, conventional microscopes are not capable of obtaining optical sections of three-dimensional samples, i.e., given a focal position of the sample, the image will contain the corresponding image of the focal plane together with the unfocused light coming from the out-of-focus planes. This causes conventional images to have low contrast, especially when high numerical aperture lenses are used, as their depth of field is very shallow.

There are different systems capable of improving transverse resolution and obtaining optical sectioning. Optical sectioning can be obtained, for example, using a scanning confocal microscope. In such a microscope, the sample is illuminated with a diffraction-limited spot and the light emitted or reflected by the sample is projected onto a pinhole of micrometric dimensions. The light passing through the pinhole reaches a wide-area detector and corresponds to a pixel of the confocal image. Light from out-of-focus planes is blocked by the pinhole. To obtain an image, it is necessary to scan the sample. This type of microscope has optical sectioning capability but does not improve transverse resolution. In addition, it has certain problems such as the bleaching of fluorescent dyes, as the light has to be concentrated in a diffraction-limited spot.

On the other hand, there are structured illumination systems that allow for improved resolution and/or optical sectioning. To do so, they project an extended illumination pattern onto the sample. This pattern is typically a cosine wave generated by the interference of two plane waves. In order to obtain a super-resolved image, the illumination pattern needs to be displaced several times and rotated in different directions. In addition, a large number of post-processing computational operations must be performed in order to obtain the final image. These systems require a total of between 9 and 75 images to be combined by means of mathematical operations and require a highly accurate knowledge of the illumination pattern parameters. The results obtained with this type of system are highly dependent on the post-processing operations, sometimes leading to artefacts in the image.

Microscopes are described in [1] and [2] that also allow super-resolution and optical sectioning to be obtained by complex post-processing operations on a large number of images of a sample (at least 15), also obtained by rotating (at least three times) a periodic structured illumination pattern, which is periodic only in one transverse direction and in the axial direction, applied on a sample. The images are obtained by wide-field capture, i.e. each image is a two-dimensional image composed of NxN pixels, and the post-processing operations involve running a computational reconstruction algorithm that requires, among other things, detecting the pattern frequency, the phase shifts, the size of the optical transfer function, and the direction of the illumination pattern. However, this method requires time to perform the computational reconstruction since it is not obtained directly when the capture is performed.

Similarly, [3] proposes a microscope based on multiple two-dimensional images, also obtained by a wide-field capture, after rotating and laterally displacing an illumination pattern (periodic in one transverse direction and in the axial direction), and a complex image processing algorithm that can require high computational times.

In addition, application WO2018/151599A1 describes a fluorescence optical microscope that allows a high-resolution image of a sample to be obtained using conventional reconstruction techniques.

In particular, said application proposes performing multiple captures, each with the sample exposed to a different illumination pattern, and performing the reconstruction using a reconstruction algorithm that processes the multiple captures together with parameters associated with the illumination patterns, including at least one of the following parameters: spatial frequency, periodicity direction, and initial phase.

The system described in that application therefore requires the projection of multiple different illumination patterns (by means of a structured lighting module) to obtain a single high-resolution image. The illumination patterns consist exclusively of a focused spot with a certain modulation.

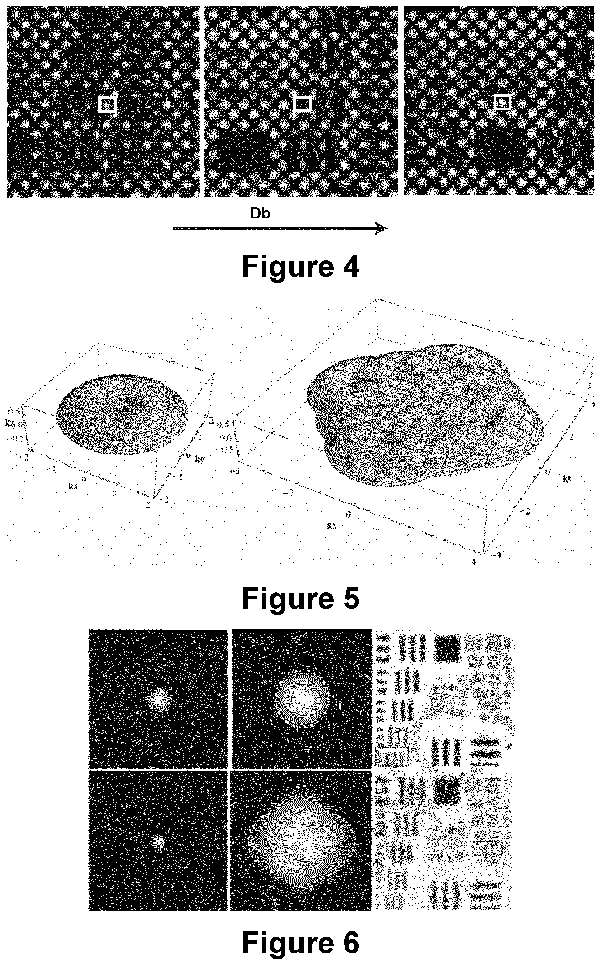

The reconstruction procedure, shown schematically in Figure 4 of WO2018/151599A1, explicitly discloses the application of a reconstruction algorithm. This requirement can also be observed in the equations present in the document. In particular, the high-resolution components are intermixed, making it necessary to apply a reconstruction algorithm that considers images captured for different phases of the illumination pattern. It should be noted that both Figure 4 and these equations are in the public domain and known to persons skilled in the art, as this is the conventional method by which structured illumination is applied.

Likewise, the proposal made in WO2018/151599A1 does not provide or enable optical sectioning.

In addition, it should be noted that the fact that WO2018/151599A1 cites multiple illumination patterns and not just one is not an advantage of the system disclosed therein, but instead a major drawback, since, as indicated above, in the system disclosed in that application, the use of multiple different illumination patterns is essential, and it would never work with only one. Moreover, for each illumination pattern, the reconstruction algorithm must know the associated parameters in order to perform the reconstruction.

It is necessary, therefore, to offer an alternative to the state of the art that covers the gaps present therein by providing a microscope that allows to obtain both a super-resolved image, i.e. with a high transverse resolution, and optical sectioning, without the need to apply any post-processing operations (i.e. without the need to use a reconstruction algorithm), nor to rotate the illumination pattern, nor to have explicit knowledge of the parameters that define the illumination pattern, nor to require more than one capture per position of the illumination pattern, nor to require more than one capture per sample scanning position, nor therefore to use more than one illumination pattern.

Description of the Invention

In view of the foregoing, the present invention relates to a fluorescence optical microscope, comprising:

- an optical microscope objective whose axis of symmetry, called the optical axis, defines a first or main direction of light propagation;

- a support (such as a plate) for supporting a sample stained with a fluorescent dye, so that it lies in the object focal plane of the optical microscope objective, or in the axial range defined by the depth of field of the optical microscope objective;

- structured illumination means, configured and arranged to project onto a sample located on the support an illumination pattern that is periodic in two mutually orthogonal transverse directions, by generating and projecting onto the aperture diaphragm of the optical microscope objective at least four spaced point light sources, generating and providing at least four plane waves whose direction of propagation is angularly equidistant, or substantially angularly equidistant (i.e. with an angular deviation tolerance of $\pm 5\%$), from said first direction of the optical axis of the optical microscope objective, the interference of which resulting in said illumination pattern;

- a scanning system configured and arranged to provide a relative displacement of the support, and therefore of the sample supported by the support, with respect to the illumination pattern, to adopt different scanning positions; and

- imaging means, comprising:

  - at least one light detector configured and arranged on a conjugate plane of the object plane of the optical microscope objective, to sequentially detect fluorescent light emitted by at least two portions of the sample, at two respective of said scanning positions, when interacting with light from the illumination pattern, collected through the optical microscope objective according to a second direction of the optical axis of the optical microscope objective, opposite to the first direction; and

  - image forming means configured and arranged to form an image of at least two pixels, from the light intensity of the fluorescent light detected by the at least one light detector, for each of the at least two portions of the sample, one per pixel.

The illumination pattern projected by the illumination means of the microscope of the present invention is not a specific pattern arbitrarily selected from among several possible known patterns, but is instead the only illumination pattern with which the technique implemented by the microscope of the present invention can function, i.e. an extended illumination pattern essential to the present invention, and whose use as a tool for achieving the aims herein discussed has been discovered and for the first time carried out by the present inventors.

In one possible embodiment, the light detector is an image sensor configured and arranged to sequentially detect, in a common detection area formed by one or more photodetector elements of the image sensor, the fluorescent light emitted by each of the two or more portions of the sample, the image forming means being configured and arranged to integrate the light intensity in the common detection area into an intensity value for each scan position, in order to form each pixel of said image. In an implementation of this embodiment, the image sensor is a multi-pixel sensor, wherein each pixel is formed by one or more of said photodetector elements.

In an alternative embodiment, the light detector is a wide-area detector, and the imaging means further comprise a pinhole configured and arranged between the optical microscope objective and the wide-area detector, so that the wide-area detector sequentially detects fluorescent light passing through the pinhole that is emitted by each of the two or more portions of the sample, the image forming means being configured and arranged to form each pixel of the image with the respective light intensity values detected by the wide-area detector for each scanning position.

In any case, the detection carried out by means of the light detector of the microscope according to the first aspect of the present invention can be called a point-like detection, either by means of a pinhole or by using a few pixels of an image sensor, so that in each capture only the image of a point is recorded, a "point" being understood as that associated with each light intensity value obtained per scanning position, either by integrating the light intensity existing in the common detection area, for the embodiment including an image sensor, or directly the light intensity value detected by the wide-area detector for each scanning position, for the embodiment including such a wide-area detector and a pinhole.

According to a preferred embodiment, the structured illumination means are configured and arranged for the generation and projection of the at least four point light sources onto the aperture diaphragm of the optical microscope objective, according to a coherent intensity distribution, forming corresponding position vectors starting from the centre of the aperture diaphragm of the optical microscope objective and angularly spaced from each other by relative angles of 90°.

A number of four point light sources is considered optimal, given the position of the resulting orders when interacting with the sample, which allows doubling the resolution in the X and Y axes, and, in turn, obtaining optical sectioning capacity.

However, the present invention also considers embodiments for which the number of point light sources is other than four, which would generate different geometries when interacting with the sample. For example, one could increase the number of point light sources in the diagonal directions (i.e., those whose projections onto the objective diaphragm form position vectors at 45° with respect to each of the other contiguous position vectors, and with a frequency close to the cut-off frequency) and thus achieve an increase in resolution not only in X and Y, but also in transverse directions.

In order to optimise the results obtained in terms of transverse resolution, allowing to double the resolution obtained with conventional microscopes, preferably the modulus of each of the aforementioned position vectors is equal or substantially equal to the radius of the aperture diaphragm of the optical microscope objective, thus extending the bandwidth of the microscope to the limit of the technique, that is, doubling the resolution of a conventional system.

In one embodiment, the optical microscope objective and the support are configured and arranged so that, in use, the light emitted by each of the two or more portions of the sample, collected through the optical microscope objective, produces, at the aperture diaphragm of the optical microscope objective, an incoherent intensity distribution pattern consisting of nine frequency components, which is proportional to the modulus squared of the illumination pattern.

According to an embodiment, the scanning system is configured and arranged so that said relative displacement occurs transversally to the optical axis of the microscope along at least a first transverse direction.

In another embodiment, the scanning system is configured and arranged so that the relative displacement also includes, in addition to the displacement according to a first transverse direction, an axial displacement along the optical axis of the microscope, in order to obtain an image, formed by part of the image forming means, corresponding to a meridional section of the sample.

Advantageously, the scanning system is configured and arranged so that the relative displacement is transverse to the optical axis of the microscope also according to a second transverse direction orthogonal to the first transverse direction.

According to another embodiment, the scanning system is configured and arranged so that the relative displacement also includes, in addition to the displacement according to a first and a second transverse direction, an axial displacement along the optical axis of the microscope, in order to obtain a three-dimensional image of the sample formed by the image forming means from optical sections of the sample. This relative axial displacement brings a different part of the sample into focus while other positions are brought out of focus. In conventional microscopy, on the image sensor plane one would obtain the sum of the intensities of the focal plane together with that of the rest of the planes that are out of focus. However, given that the microscope according to the first aspect of the present invention provides optical sectioning, once the scanning has been performed the final image captures only the light coming from each of the focal planes, eliminating the out-of-focus information.

According to an embodiment, the microscope of the first aspect of the present invention further comprises a tube lens placed between the optical microscope objective and the light detector(s), configured to conjugate the object focal plane of the optical microscope objective at its focal length, providing the above-mentioned conjugate plane.

In another embodiment, the microscope further comprises at least one dichroic filter configured and arranged to direct, according to said first direction, light with an illumination wavelength that generates the at least four point light sources, towards the aperture diaphragm of the optical microscope objective, and to direct towards the light detectors, according to said second direction, only the fluorescent light collected by the optical microscope objective, which has a longer wavelength than the illumination wavelength, blocking the passage of light with the illumination wavelength towards the light detector(s).

Since the pixel size of the final image formed is given by the step chosen to scan the sample, in order to observe the improvement in resolution said step must be less than a quarter of the resolution limit of the optical microscope objective, whereby, for a preferred embodiment, the scanning system is configured and arranged to provide the relative displacement with a scanning step of less than a quarter of the resolution limit of the optical microscope objective, so as to avoid overlapping portions of the sample within the common detection area.

The microscope proposed by the first aspect of the present invention allows reaching lateral resolutions below the limit set by diffraction, allowing to double the transverse resolution of a conventional microscope. At the same time, the microscope is capable of optical sectioning, i.e., it eliminates the light coming from the out-of-focus planes in 3D samples.

The present invention also concerns, in a second aspect, a method for obtaining fluorescence optical microscopy images comprising:

- projecting onto a sample stained with a fluorescent dye and arranged in the object focal plane of an optical microscope objective, or in the axial range defined by the depth of field of such optical microscope objective, an illumination pattern that is periodic in two mutually orthogonal transverse directions, by generating and projecting onto the aperture diaphragm of the optical microscope objective at least four point light sources, spatially distanced from each other, generating and providing at least four plane waves whose direction of propagation is angularly equidistant, or substantially angularly equidistant (i.e., with an angular deviation tolerance of $\pm 5\%$), from a first direction of the optical axis of the optical microscope objective, the interference of which results in said illumination pattern;

- providing a scan that includes a relative displacement of the sample with respect to said illumination pattern, to adopt different scanning positions;

- sequentially detecting, in a conjugate plane of the object plane of the optical microscope objective, fluorescent light emitted by at least two portions of the sample, at two respective of said scanning positions, when interacting with the light of the illumination pattern, collecting said fluorescent light through the optical microscope objective in a second direction opposite to the first direction; and

- forming an image of at least two pixels from the light intensity in the fluorescent light detected for each of said at least two portions of the sample, one per pixel.

The method of the second aspect of the present invention is adapted to perform the various steps thereof using the microscope proposed by the first aspect of the invention.

By means of the present invention, unlike proposals known in the prior art (such as that described in WO2018/151599A1):

- No reconstruction algorithm is necessary to obtain a high resolution image.

- The image obtained not only directly provides a high-resolution image, but also simultaneously provides optical sectioning.

- An explicit knowledge of the parameters defining the illumination pattern is not required.

- The illumination pattern must necessarily be extensive to provide the above-mentioned properties, not being only a focused spot with some modulation as in WO2018/151599A1.

- A single capture per sample scanning position is required, such that illumination of the sample with multiple patterns is not necessary.

- The calculation of the Fourier transform of the image is not required since, after scanning, the high-resolution components are perfectly localised (as shown in Figure 5 of this application, which will be described in a later section of this document).

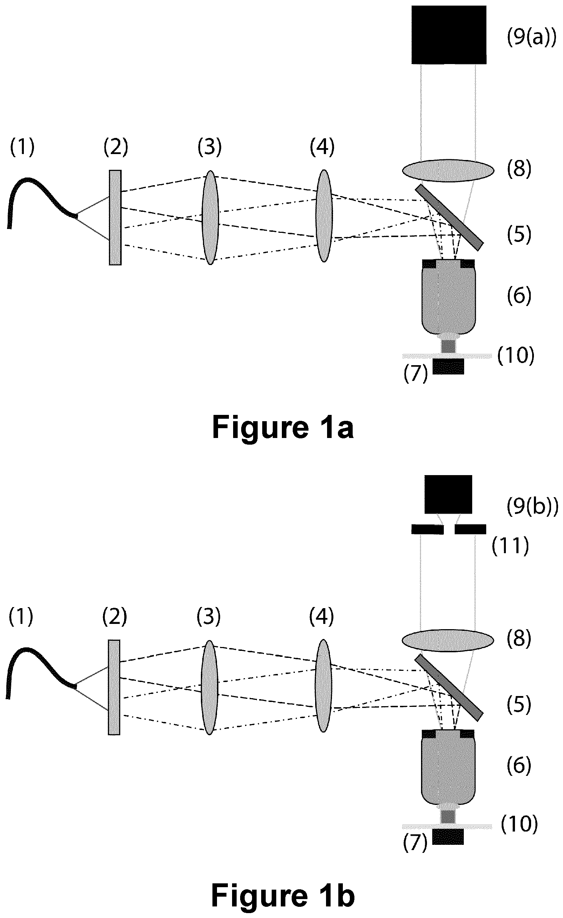

- The acquisition of the light intensity for each scanning position is performed, in general by means of a pinhole, either real (see Figure 1b) or synthetic (i.e., generated by a small number of pixels of an image sensor, as shown in Figure 1a). This is not the case in the microscope of WO2018/151599A1.

Brief Description of the Drawings

The foregoing and other advantages and features will be better understood in view of the following detailed description of examples of embodiments made with reference to the accompanying drawings, which are to be taken as illustrative and not limiting, wherein:

Figure 1a shows a schematic representation of the assembly of the microscope proposed by the first aspect of the present invention, in an embodiment for which the light detector thereof comprises an image sensor or pixelated detector.

Figure 1b shows a schematic representation of the assembly of the microscope proposed by the first aspect of the present invention, in an embodiment in which the light detector thereof comprises a pinhole and a wide-area detector.

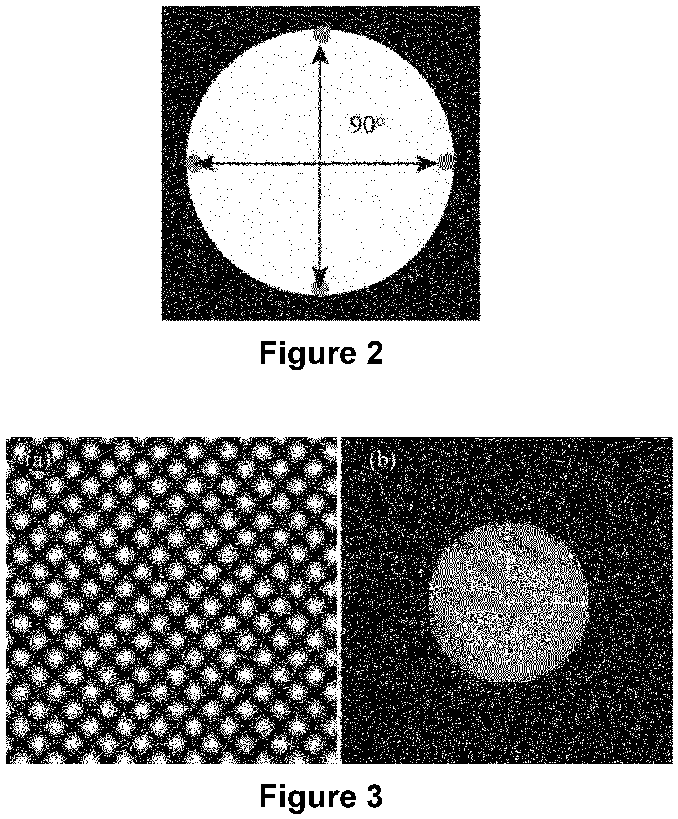

Figure 2 shows a schematic representation of the illumination employed on the aperture diaphragm of the microscope objective proposed by the first aspect of the present invention, in an embodiment in which the modulus of each of the four position vectors of the projection onto the aperture diaphragm of the four point light sources is equal or substantially equal to the radius of the aperture diaphragm of the optical microscope objective.

Figure 3. (a) Simulation of the pattern resulting from the interaction between the proposed illumination and a flat, uniform fluorescent sample, which is very similar to the interference produced between the four plane waves (which is the square root of said intensity distribution). (b) Representation of the 9 orders of collection on the aperture diaphragm.

Figure 4. Representation of the distribution of intensities on the image sensor of the scheme shown in Figure 1a, for three scanning positions in one of the transverse directions. The white square represents the common detection area in which the intensity of the fluorescent light detected by each of the pixels contained therein is added to obtain one pixel of the final image.

Figure 5. Calculation of the three-dimensional shape of the optical transfer function of (left) a conventional microscope, and (right) the microscope proposed by the present invention.

Figure 6. Results obtained by simulating image formation using a conventional microscope (top) and the microscope proposed by the present invention (bottom). These results correspond to (left) the impulse response of the system, (centre) the transverse OTF, and (right) the image of a USAF 1951 test.

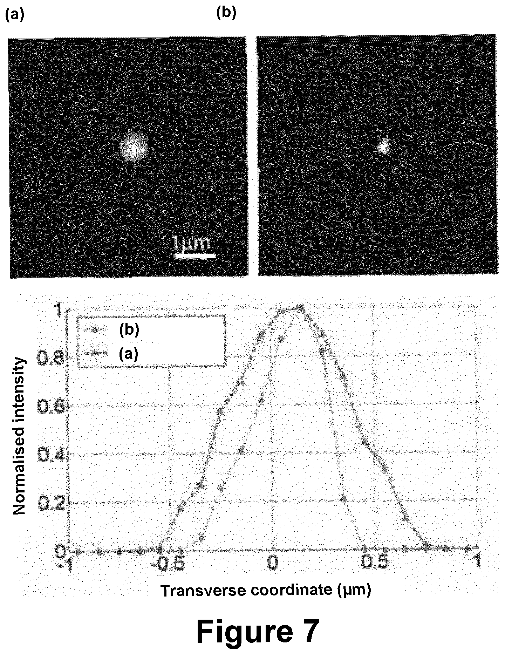

Figure 7. Experimental results of the transverse scanning of a gold nanoparticle using a prototype of the microscope according to the present invention and a conventional microscope. As can be seen, the impulse response of the microscope proposed by the present invention (b) is twice as narrow as that of a conventional microscope (a).

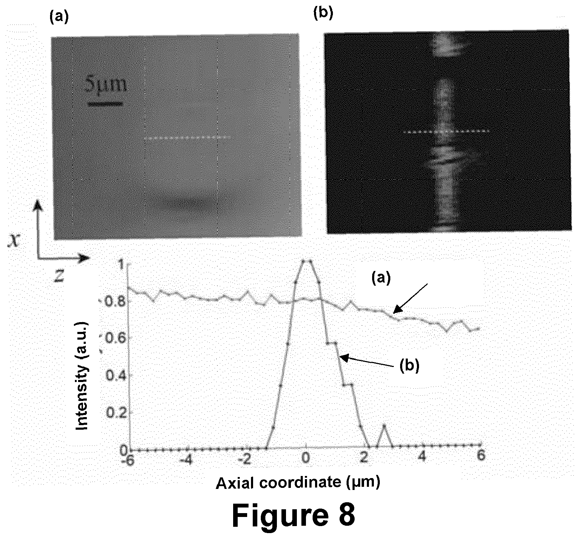

Figure 8. Measurements resulting from the axial scanning of a flat fluorescent sheet using a conventional microscope (a) and using the microscope proposed by the present invention (b). As can be seen, the microscope proposed by the present invention has optical sectioning capability, as it eliminates light from the planes of the sample that are not the focal plane.

Detailed Description of Some Embodiments

Figures 1a and 1b illustrate two possible schemes of the microscope proposed by the present invention, for two corresponding embodiments, for which the microscope comprises the following components:

(1) A fully or partially coherent laser point source. Such a point source can be obtained with a laser coupled to a fibre using the output of the fibre as the point source, or with a laser in the focused free space.

(2) An optical element (diffractive or refractive) capable of generating four or more mutually coherent virtual point light sources from illumination with a single point source. Depending on the embodiment, this could be a glass pyramid whose vertex coincides with the optical axis, a square diffraction grating in which higher orders were filtered or electronically controlled spatial light modulators, or any other optical element capable of performing the described function.

(3) A collimating lens positioned at its focal length relative to the laser point source.

(4) A projection lens focusing the point source(s) on the diaphragm of an optical microscope objective (6).

(5) A dichroic filter or set of filters whose purpose is to illuminate using the laser wavelength, i.e. to direct towards the aperture diaphragm of the optical lens (6), according to a first direction, the light emitted by the laser, and to collect exclusively the light emitted by the sample, i.e. to direct towards the light detector, according to a second direction, exclusively the fluorescent light collected by the optical lens 6, which has a wavelength longer than the illumination wavelength, blocking the passage of the laser light.

(6) An optical microscope objective used to illuminate the sample and collect the light emitted by the sample.

(7) A sample scanning system: This system can be a mechanical scanning system, that is, an apparatus allowing the sample to be moved with high precision (below 50 nm). A beam scanning system could also be used instead of moving the sample, i.e. a set of high-precision galvanometric mirrors (not shown). In the latter case, this element would be placed between the dichroic filter (5) and the microscope objective (6).

(8) A tube lens allowing to conjugate the object focal plane of the objective at its focal length (between 160 mm and 300 mm).

(9a), (9b). A light detector forming part of image forming means and configured and arranged on a conjugate plane of the object plane of the optical microscope objective (6), to sequentially detect fluorescent light emitted by different portions of said sample, at respective scanning positions, when interacting with the light of the illumination pattern collected through the optical objective (6) according to said second direction.

(10) A plate for supporting a sample stained with a fluorescent dye, so that it is positioned in the vicinity of the object focal plane of the optical microscope objective (6).

In the embodiment shown in Figure 1a, the light detector (9a) is an image sensor (such as a digital camera) configured and arranged to sequentially detect, in a common detection area formed by one or more photodetector elements or pixels thereof, the fluorescent light emitted by each of the portions of the sample, the image forming means being configured and arranged to integrate the light intensity in a common detection area into an intensity value per scan position to form each pixel of the image of the sample.

Figure 4 illustrates the distribution of intensities on the image sensor (9a) of the schematic representation shown in Figure 1a, for three scanning positions in one of the transverse directions, according to the direction indicated by the reference Db. The white square represents the aforementioned common detection area, in which the intensity of the fluorescent light detected by each of the pixels contained therein is added to obtain one pixel of the final image.

In the embodiment shown in Figure 1b, the light detector (9b) is a wide-area detector, and the image forming means further comprises a pinhole (11) configured and arranged between the optical lens (6) and the wide-area detector (9b), so that the wide-area detector (9b) sequentially detects fluorescent light passing through the pinhole (11) and emitted by each of the different portions of the sample, the image forming means being configured and arranged to form each pixel of the image of the sample from the respective light intensity values detected by the wide-area detector (9b) for each scanning position. The pinhole preferably has a size on the order of micrometres (between 1-50 $\mu$m) and is located above the focal plane of the tube lens (8).

In order to allow the microscope to double the lateral resolution and to have optical sectioning, instead of illuminating the sample with uniform light (as is typical in conventional microscopes), the sample is illuminated by the pattern resulting from the interference of four plane waves. These plane waves interfere in such a way that their wave vector forms an angle with the optical axis which depends on the numerical aperture and whose transverse projection is given by orthogonal vectors (each transverse projection of the wave vector being at 90 degrees to the contiguous vector). A simple way to achieve this illumination pattern is by creating an image of four point light sources that are coherent with each other on the aperture diaphragm of the microscope objective. These sources would be obtained by making the image of the virtual point sources generated with element (2) of the assembly. In order to obtain the desired relative angles between the plane waves in the object plane, the position vectors with respect to the centre of the diaphragm of each of the point light sources must form angles of 90, 180 and 270° with each other, as shown in Figure 2, which shows the aperture diaphragm with four positional vectors starting from the centre of the aperture diaphragm and ending in respective circles representing the projections of the four point light sources or illumination orders. The greater the modulus of the position vector of these sources with respect to the centre of the diaphragm, the greater the angle the plane waves form with respect to the optical axis in the object space. For the case shown in Figure 2, the modulus is almost equal to the radius of the aperture diaphragm.

A fluorescent sample is illuminated by means of said structured pattern. The sample interacts with the coherent light of the pattern and emits incoherently, as explained mathematically below.

The plane waves generated in the object space represent a coherent intensity distribution that can be described mathematically as follows:

$$s(x,y) = e^{j\pi Ax} + e^{-j\pi Ax} + e^{-j\pi Ay} + e^{-j\pi Ay},$$

Where A is the modulus of the vector defining the position of the point sources in the pupil plane.

The interaction with a fluorescent sample with a spatial distribution of fluorophores $O(x,y)$ generates an incoherent intensity distribution which can be expressed as:

$$I(x,y) = |s(x,y)|^2 O(x,y) =$$
$$= [4 + e^{j2\pi Ax} + e^{-j2\pi Ax} + e^{j2\pi Ay} + e^{-j2\pi Ay} + e^{j\pi A(x+y)} + e^{j\pi A(y-x)} + e^{j\pi A(x-y)} + e^{-j\pi A(x+y)}]O(x,y).$$

As can be seen, the interference of the 4 coherent plane waves results in an incoherent intensity distribution with nine components and, therefore, in the Fourier space there will be nine orders corresponding to each of these components.

Therefore, if a uniform, thin fluorescent sample is considered, the light resulting from the interaction between the illumination and sample is simply an intensity proportional to the modulus squared of the coherent pattern. The objective (6) used for illumination collects the light emitted by the sample (which has a wavelength longer than the illumination light). The collected light, being proportional to the modulus squared of the illumination pattern, produces a pattern of 9 collection frequency components in the aperture diaphragm which will be referred to as collection orders, as shown in view (b) of Figure 3. These collection orders appear, as well as in the same positions as the illumination orders (i.e. the projections of the four point light sources) and one positioned at the centre of the aperture diaphragm, at intermediate positions at 45° (which will be referred to as mixed orders) and with a position vector with respect to the centre with a modulus equal to half that of the illumination orders. To optimise the microscope, the modulus of the position vectors of the higher modulus vectors must be equal to the radius of the aperture diaphragm. If an image of the uniform, flat fluorescent sample is created on a pixel detector (9a), a pattern in the form of a grid of dots is observed, as shown in view (a) of Figure 3. The interference produced between the 4 waves is very similar to that shown in view (a) of Figure 3.

The grid of dots may be observed on the pixel detector (9a) or be projected onto a pinhole (11) located in front of a wide-area detector (9b) (so that a maximum intensity of the grid coincides with the centre of the pinhole (11)). In the case of the pixel detector (9a), a subregion with a relatively low number of pixels may be selected so as to integrate the intensity of the pixels in that subregion into a single value. With this in mind, a sample with the appropriate fluorescent dye is placed in the object focal plane of the optical microscope objective (6). For a given position of the sample, an intensity signal is obtained either by the above-mentioned pixel integration or by the wide-area detector (9b). This intensity value corresponds to the relative position of the sample and the illumination. In order to obtain an image, the sample is successively moved using, for example, a piezoelectric positioning system (7) connected to the plate (10), or by illumination with a galvanometric mirror system (not shown). For each sample or illumination position, referred to as a scanning position, an intensity value is obtained corresponding to a pixel of the final image, appropriately positioned according to the scanning positions. Such a scan may be (1) transverse: i.e. perpendicular to the optical axis to obtain a focal plane of the sample, (2) transverse and axial: scanning the sample in a transverse direction and in the direction of the optical axis, or (3) three-dimensional: a succession of transverse scans (in two mutually orthogonal directions) is performed for different axial positions of the sample which, using appropriate software, can be compiled into a three-dimensional representation of intensities of the sample image.

The microscope proposed by the present invention, through the combination of a suitable structured illumination and the scanning of the sample, allows doubling the transverse resolution compared to a conventional microscope as well as providing optical sectioning capability. This can be understood by studying the transmission of special frequencies from the object space to the image space. In a conventional microscope, such transmission occurs in a spatial frequency band limited by the three-dimensional function known as the optical transfer function (OTF). This function is shaped like a toroid and indicates that the object space frequencies within it will pass from the object to its corresponding image (see Figure 5). On the one hand, the transverse shape of this function is closely related to the size of the aperture diaphragm of the microscope objective and the focal length of the objective (i.e., the numerical aperture). On the other hand, the fact that conventional microscopes lack optical sectioning is due to the shape of this function, as it has an empty cone in the direction of the spatial frequencies in the axial direction which prevents the transmission of volume details of the object to its corresponding image.

The microscope proposed by the present invention, once an image is captured by scanning the sample or illumination, has an OTF different from that of a conventional microscope. In fact, its OTF is given by 9 of replicas of the conventional OTF placed on the positions of the spatial frequency space given by the collection orders on the aperture diaphragm of the microscope objective. If the point light sources are physically located at the ends of the aperture diaphragm, the bandwidth of the OTF of the proposed microscope is twice that of a conventional microscope, that is, it will have double the resolution. In addition, the replicas of the OTF that are displaced to the positions given by the mixed orders allow filling the missing cone, that is, they provide the microscope with optical sectioning capability.

Figure 6 shows simulated results for the functionality of the microscope proposed by the present invention. These calculations correspond to the conventional image and to the image obtained using the proposed microscope by transversal scanning of a single point (typically known as impulse response) and a USAF 1951 resolution test. The transverse impulse response is directly related to the resolution of the microscope and its Fourier transform is the transverse OTF, also shown in Figure 6. As can be seen the OTF of the proposed microscope has double the bandwidth of a conventional microscope. The same can be seen in the image of the USAF 1951 test, where the proposed microscope has twice the resolution of the conventional microscope (a resolution improvement of one group, that is, six elements of the test).

In addition, preliminary results obtained by a prototype of the microscope according to the first aspect of the invention are presented. Figure 7 shows the image of a gold nanoparticle using a 50x NA=0.6 objective for both the case of a conventional microscope (a) and the one proposed by the present invention (b). As can be seen, the impulse response obtained by this measurement is approximately half as narrow in the proposed microscope, that is, the microscope of the invention has double the resolution of the conventional one.

On the other hand, the optical sectioning capability is tested by axial scanning of a flat fluorescent sheet, both for the conventional case (a) and with the scanning structured illumination microscope (b), where the measurements resulting from such axial scanning of a flat fluorescent sheet are shown in Figure 8.

A person skilled in the art could make changes and modifications to the described embodiments without departing from the scope of the invention as defined in the appended claims.

**References**

[1] Mats G L Gustafsson; Lin Shao; Peter M Carlton; Rachel Wang C J; Inna N Golubovskaya; Zacheus Cande W; David A Agard; John W Sedat, "Three-Dimensional Resolution Doubling in Wide-Field Fluorescence Microscopy by Structured Illumination".

[2] Yasuhiro Hirano; Atsushi Matsuda; Yasushi Hiraoka," Recent advancements in structured-illumination microscopy toward live-cell imaging".

[3] Birk Udo; Hase Johann V; Cremer Christoph, "Super-resolution microscopy with very large working distance by means of distributed aperture illumination".

**Claims**

1. Fluorescence optical microscope, comprising:

- an optical microscope objective (6) whose axis of symmetry, called the optical axis, defines a first or main direction of light propagation;
- a support (10) for supporting a sample stained with a fluorescent dye, so as to lie in the object focal plane of said optical microscope objective (6), or in the axial range defined by the depth of field of said optical microscope objective (6);
- structured illumination means configured and arranged to project onto a sample located on said support (10) an illumination pattern that is periodic in two mutually orthogonal transverse directions, by generating and projecting onto the aperture diaphragm of said optical microscope objective (6) at least four point light sources, spatially distanced from each other, generating and providing at least four plane waves whose direction of propagation is angularly equidistant, or substantially equidistant, from said first direction of the optical axis of the optical microscope objective (6), the interference of which results in said illumination pattern;
- a scanning system (7) configured and arranged to provide a relative displacement of said support (10), and hence of the sample supported thereby, with respect to said illumination pattern, to adopt different scanning positions; and
- imaging means, comprising:

  - at least one light detector configured and arranged on a conjugate plane of the object plane of the optical microscope objective (6), to sequentially detect fluorescent light emitted by at least two portions of said sample, at two respective of said scanning positions, when interacting with light from the illumination pattern, collected through said optical microscope objective (6) according to a second direction of the optical axis of the optical microscope objective (6), opposite to said first direction; and
  - image forming means configured and arranged to form an image of at least two pixels, from the light intensity of the fluorescent light detected by the at least one light detector for each of said at least two portions of the sample, one per pixel.

2. Microscope according to claim 1, wherein said at least one light detector is an image sensor (9(a)) configured and arranged to sequentially detect, in a common detection area formed by one or more photodetector elements of said image sensor (9(a)), the fluorescent light emitted by each of said at least two portions of the sample, said image forming means being configured and arranged to integrate the light intensity in said common detection area into an intensity value per scan position to form each pixel of said image.

3. Microscope according to claim 1, wherein said light detector is a wide-area detector (9(b)), and said image forming means further comprise a pinhole (11) configured and arranged between said optical microscope objective (6) and said wide-area detector (9(b)), so that the wide-area detector (9(b)) sequentially detects fluorescent light passing through the pinhole (11) and emitted by each of said at least two portions of the sample, said image forming means being configured and arranged to form each pixel of said image with the respective light intensity values detected by the wide-area detector (9(b)) for each scanning position.

4. Microscope according to any of the preceding claims, wherein the structured illumination means are configured and arranged for the generation and projection onto the aperture diaphragm of the optical microscope objective (6) of said at least four point light sources, according to a coherent intensity distribution, forming respective position vectors starting from the centre of the aperture diaphragm of the optical microscope objective (6) and angularly spaced from each other by relative angles of 90°.

5. Microscope according to claim 4, wherein the modulus of each of said position vectors is equal to or substantially equal to the radius of the aperture diaphragm of the optical microscope objective (6).

6. Microscope according to claim 4 or 5, wherein the optical microscope objective (6) and the support (10) are configured and arranged so that, in use, the light emitted by each of the at least two portions of the sample and collected through the optical microscope objective (6), produces, at the aperture diaphragm of the optical microscope objective (6), an incoherent intensity distribution pattern consisting of nine frequency components, which is proportional to the modulus squared of the illumination pattern.

7. Microscope according to any of the preceding claims, wherein said scanning system (7) is configured and arranged so that said relative displacement occurs transversally to the optical axis of the microscope along at least a first transverse direction.

8. Microscope according to claim 7, wherein said scanning system (7) is configured and arranged so that said relative displacement is transverse to the optical axis of the microscope also according to a second transverse direction orthogonal to said first transverse direction.

9. Microscope according to claim 7, wherein said scanning system (7) is configured and arranged so that said relative displacement also includes an axial displacement along the optical axis of the microscope, to obtain an image formed by part of said image forming means, corresponding to a meridional section of the sample.

10. Microscope according to claim 8, wherein said scanning system (7) is configured and arranged so that said relative displacement also includes an axial displacement along the optical axis of the microscope, to obtain a three-dimensional image of the sample formed by said image forming means, from some optical sections thereof.

11. Microscope according to any of the preceding claims, further comprising a tube lens (8) arranged between said optical microscope objective (6) and said at least one light detector, and configured to conjugate the object focal plane of the optical microscope objective (6) at its focal length, providing said conjugate plane.

12. Microscope according to any of the preceding claims, further comprising at least one dichroic filter configured and arranged to direct, according to said first direction, light having an illumination wavelength that generates said at least four point light sources, towards the aperture diaphragm of the optical microscope objective (6), and to direct towards the at least one light detector, along said second direction, only the fluorescent light collected by the optical microscope objective (6), which has a longer wavelength than said illumination wavelength, blocking the passage of light with said illumination wavelength towards the light detector.

13. Microscope according to any of the preceding claims, wherein said scanning system (7) is configured and arranged to provide said relative displacement with a scanning step of less than one quarter of the resolution limit of the optical microscope objective (6).

14. A method for fluorescence optical microscopy imaging, comprising:

- projecting onto a sample stained with a fluorescent dye and arranged in the object focal plane of an optical microscope objective, or in the axial range defined by the depth of field of said optical microscope objective, an illumination pattern that is periodic in two transverse directions orthogonal to each other, by generating and projecting onto the aperture diaphragm of said optical microscope objective at least four point light sources, spatially distanced from each other, generating and providing at least four plane waves whose direction of propagation is angularly equidistant, or substantially equidistant, from a first direction of the optical axis of the optical microscope objective, the interference of which results in said illumination pattern;
- providing a scan that includes a relative displacement of said sample with respect to said illumination pattern, to adopt different scanning positions;
- sequentially detecting, in a conjugate plane of the object plane of the optical microscope objective, fluorescent light emitted by at least two portions of said sample, at two respective of said scanning positions, when interacting with the light of the illumination pattern, collecting said fluorescent light through said optical microscope objective in a second direction opposite to the first direction; and
- forming an image of at least two pixels from the light intensity in the fluorescent light detected for each of said at least two portions of the sample, one per pixel.

**Figure 1a**

**Figure 1b**

Figure 2

Figure 3

Db

## Figure 4

## Figure 5

## Figure 6

Figure 7

**Figure 8**

## INTERNATIONAL SEARCH REPORT

| | International application No. |
|---|---|
| | PCT/ES2019/070860 |

**A. CLASSIFICATION OF SUBJECT MATTER**

*G02B21/36* (2006.01)

According to International Patent Classification (IPC) or to both national classification and IPC

**B. FIELDS SEARCHED**

Minimum documentation searched (classification system followed by classification symbols)
G02B, G02F, G06T

Documentation searched other than minimum documentation to the extent that such documents are included in the fields searched

Electronic data base consulted during the international search (name of data base and, where practicable, search terms used)

EPODOC, INVENES, WPI, INSPEC

**C. DOCUMENTS CONSIDERED TO BE RELEVANT**

| Category* | Citation of document, with indication, where appropriate, of the relevant passages | Relevant to claim No. |
|---|---|---|
| X | WO 2018/151599 A1 (UNIVERSITEIT VAN AMSTERDAM) 23/08/2018, abstract; page 1, lines 3-7; page 3, lines 10-30; page 7, line 19 - page 8, line 30; page 10, line 31 - page 11, line 11; page 13, lines 17-31; page 14, lines 1-11, 24-35; page 18, line 31 - page 19, line 25; page 21, lines 15-32; page 30, line 27 - page 33, line 7; figures 5A - 6. | 1-5, 7-12, 14 |
| A | EP 2801854 A1 (RUPRECHT-KARLS-UNIVERSITÄT HEIDELBERG) 12/11/2014, abstract; paragraphs [0001]-[0023]; [0040]-[0063]; figures 4-6. | 1, 2, 4, 7-12, 14 |
| A | WO 2017/177180 A1 (ARIZONA BOARD OF REGENTS) 12/10/2017, abstract; paragraphs [0002]-[0010]; figures. | 1, 4, 9, 14 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 24/04/2020 | **(27/04/2020)** |
| Name and mailing address of the ISA/ OFICINA ESPAÑOLA DE PATENTES Y MARCAS Paseo de la Castellana, 75 - 28071 Madrid (España) Facsimile No.: 91 349 53 04 | Authorized officer Ó. González Peñalba Telephone No. 91 3495475 |

Form PCT/ISA/210 (second sheet) (January 2015)

| INTERNATIONAL SEARCH REPORT | | International application No. | |
|---|---|---|---|
| Information on patent family members | | PCT/ES2019/070860 | |

| Patent document cited in the search report | Publication date | Patent family member(s) | Publication date |
|---|---|---|---|
| WO2018151599 A1 | 23.08.2018 | EP3583459 A1<br>NL2018386B B1 | 25.12.2019<br>06.09.2018 |
| EP2801854 A1 | 12.11.2014 | US2016124208 A1<br>US9874737 B2<br>WO2014180566 A1 | 05.05.2016<br>23.01.2018<br>13.11.2014 |
| WO2017177180 A1 | 12.10.2017 | US2019162945 A1 | 30.05.2019 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018151599 A1

### Non-patent literature cited in the description

- **MATS G L GUSTAFSSON ; LIN SHAO ; PETER M CARLTON ; RACHEL WANG C J ; INNA N GOLUBOVSKAYA ; ZACHEUS CANDE W ; DAVID A AGARD ; JOHN W SEDAT.** *Three-Dimensional Resolution Doubling in Wide-Field Fluorescence Microscopy by Structured Illumination*
- **YASUHIRO HIRANO ; ATSUSHI MATSUDA ; YASUSHI HIRAOKA.** *Recent advancements in structured-illumination microscopy toward live-cell imaging*
- **BIRK UDO ; HASE JOHANN V ; CREMER CHRISTOPH.** *Super-resolution microscopy with very large working distance by means of distributed aperture illumination*